# EUROPEAN PATENT SPECIFICATION

(11) **EP 3 575 638 B1**
(45) Date of publication and mention of the grant of the patent: **29.07.2020**
(21) Application number: 19169234.2
(22) Date of filing: 15.04.2019
(51) Int. Cl.: F16H 57/021, F16H 57/023, F16H 3/091

(54) **TRANSMISSION OF VEHICLE AND MANUFACTURING METHOD THEREOF**
GETRIEBE FÜR EIN FAHRZEUG UND HERSTELLUNGSVERFAHREN FÜR EIN SOLCHES GETRIEBE
BOÎTE DE VITESSE POUR VÉHICULE ET PROCÉDÉ DE FABRICATION D'UNE TELLE BOÎTE DE VITESSE

(30) Priority: 01.06.2018 JP 2018106197
(43) Date of publication of application: 04.12.2019
(73) Proprietor: Mazda Motor Corporation, Aki-gun Hiroshima 730-8670 (JP)
(72) Inventor: Kitahara, Tomoyuki, Hiroshima, 730-8670 (JP); Yamada, Tomoyuki, Hiroshima, 730-8670 (JP); Yamaguchi, Yuki, Hiroshima, 730-8670 (JP); Okadome, Yasuki, Hiroshima, 730-8670 (JP)
(74) Representative: Behr, Wolfgang

(56) References cited:
- WO-A1-2009/129892
- DE-A1-102009 045 479

## Description

### BACKGROUND

The present invention relates to a transmission of a vehicle such as an automobile and a manufacturing method of the transmission.

In general, a transmission (a manual transmission) to be mounted on a front engine-rear drive (FR) vehicle includes, for example, an input shaft coupled to an output shaft of a power source such as an engine via a clutch, an output shaft disposed coaxially with the input shaft and outputting power that has been transmitted to the input shaft to a rear wheel differential device and the like, and a counter shaft disposed parallel to the input and output shafts.

The transmissions as described above are classified into input reduction type transmissions and output reduction type transmissions.

The input reduction type transmission reduces rotational driving force of the input shaft via a reduction gear train at a predetermined reduction gear ratio, transmits the reduced rotational driving force to the counter shaft, reduces the rotational driving force transmitted to the counter shaft via a transmission gear train provided between the counter shaft and the output shaft at a reduction ratio corresponding to a shift stage, and transmits the reduced rotational driving force to the output shaft.

The output reduction type transmission reduces the rotational driving force of the input shaft via a transmission gear train provided between the input shaft and the counter shaft at a reduction ratio corresponding to a shift stage, transmits the reduced rotational driving force to the counter shaft, reduces the rotational driving force transmitted to the counter shaft via a reduction gear train at a predetermined reduction gear ratio, and transmits the reduced rotational driving force to the output shaft.

Furthermore, the transmission switches transmission gear ratios by selectively bringing one of a plurality of transmission gear trains into a power transmission state via synchronizers.

The aforementioned plurality of shafts, the transmission gear trains, the synchronizers, and the other components together form a transmission unit, and the transmission unit is housed in a transmission case. The plurality of shafts are rotatably supported, via bearings, by the transmission case at both ends of the shafts in the front-to-rear direction of the vehicle.

The shafts described above receive rotational driving force from the power source such as an engine. If the rotational driving force received by the shafts is strong, flexion is likely to occur in the shafts when power transmission takes place.

Furthermore, in a case where the transmission is configured in multiple stages in order to improve drive feeling and the like, since the number of gear trains and synchronizers provided to the input shaft, the output shaft, and the counter shaft increases and these shafts are designed to be longer, flexion is more likely to occur in the shafts when power transmission takes place.

In particular, in the above-described transmission having the input shaft and the output shaft disposed coaxially with each other may be configured such that, for example, the input shaft is internally fitted to the output shaft and the transmission case supports, via bearings, an end of the input shaft on the vehicle front side and an end of the output shaft on the vehicle rear side. Therefore, this configuration makes flexion further likely to occur in a fitting part between the shafts when power transmission takes place.

Since the aforementioned flexion of the shaft causes a problem in terms of gear strength and gear noise, the transmission requires a shaft support structure for coping with such a problem.

To address this problem, Japanese Unexamined Patent Publication No. 2017-15250 describes a six-speed transmission of the output reduction type. In this transmission, the input shaft, the output shaft, and the counter shaft are provided with, in addition to a front end bearing and a rear end bearing provided at both ends in the front-to-rear direction of the vehicle as described above, an intermediate bearing between the front end bearing and the rear end bearing. Specifically, both ends of the output shaft are supported on the rear end bearing and the intermediate bearing, thereby ensuring the supportability of the fitting part between the output shaft and the input shaft internally fitted to the output shaft.

Furthermore, with respect to the output shaft, the intermediate bearing is disposed in the vicinity of a reduction gear train to which an especially heavy load is applied, so that flexion in the shaft is reduced when power transmission takes place.

In order to dispose the intermediate bearing at an intermediate portion of the transmission as described above, it is necessary to provide the transmission case with a support for supporting the bearing.

For this purpose, it is conceivable to divide the transmission case into three segments, namely, first to third sub-cases from the vehicle front side, and to form a vertical wall in the intermediate case constituting an intermediate portion of the transmission case, the vertical wall protruding radially inward and having a radially inward surface provided with a support for supporting the bearing. However, an increase in the number of segments of the transmission case results in a situation where casting of the transmission case requires the same number of molds as the segments. Such a situation increases plant and equipment investment. Thus, it is desired to reduce the number of segments of the transmission case.

Each of WO 2009/129892 A1 and DE 10 2009 045479 A1 discloses a transmission comprising a transmission case which is of the three-segment type and which is divided into three segments, namely a clutch housing and a two-segment type gear case; and comprising an intermediate plate which is bolt-fastened between the two segments of the gear case.

On the other hand, for a two-segment type transmission case in which the transmission case is divided into two segments, namely, a front case and a rear case, an intermediate plate can be provided to be fixed in the rear case and a support for supporting a bearing can be provided to the intermediate plate. In this way, it is possible to reduce the number of molds of the transmission case as compared with a case where the transmission case is divided into three segments.

### SUMMARY

A transmission having the aforementioned two-segment type transmission case is assembled in the following manner. A transmission unit, in which the transmission gear trains, the synchronizers, and the like have been assembled to the aforementioned shafts, and the intermediate plate are assembled to the rear case from a matching surface of the rear case with the front case. In such a case, the intermediate plate is fastened to the rear case with a bolt or the like from the matching surface with the front case.

Thereafter, the rear case assembled with the transmission unit and the intermediate plate may be fastened to the front case with a bolt or the like from the matching surface of the front case with the rear case.

That is, in the transmission having the aforementioned two-segment type transmission case, the direction in which the intermediate plate is fastened to the rear case differs from the direction in which the rear case is fastened to the front case.

In such a configuration, assembling the rear case, with which the transmission unit and the intermediate plate have been assembled, and the front case together involves some difficulty. For example, in a state in which the front case is disposed such that its matching surface with a power source faces downward, large equipment is required to reverse the front case after the transmission unit and the intermediate plate have been assembled to the rear case.

An object of the present invention is to provide a transmission of a vehicle and a manufacturing method of the transmission, wherein the transmission has the aforementioned two-segment type transmission case including an intermediate plate, and is capable of improving the assemblability of the transmission and ensuring the supportability of shafts while substantially preventing an increase in the number of segments of the transmission case.

In order to achieve the object, the following transmission of a vehicle and manufacturing method of the transmission are provided.

Specifically, the transmission is to be longitudinally mounted and includes a transmission case that houses a transmission unit and a plurality of transmission gear trains. The transmission is configured such that the shafts extend in a front-to-rear direction of the vehicle when the transmission is mounted on a rear side of an engine which is longitudinally installed in the vehicle, and each of the shafts is supported by the transmission case at a front portion and a rear portion of the shaft. The transmission case is of the two-segment type, in which the transmission case is divided into two segments, namely a clutch housing and a gear case. The gear case is provided at an intermediate portion thereof with an intermediate plate holding intermediate bearings, the intermediate bearings supporting the shafts. The intermediate plate is bolt-fastened to the gear case with a bolt inserted from outside of the gear case toward the clutch housing.

With this configuration, each shaft extending in the front-to-rear direction of the vehicle is supported by the transmission case, which is divided into the clutch housing and the gear case, at the front portion and the rear portion while an intermediate portion of the shaft is supported on an intermediate bearing held by the intermediate plate provided in the intermediate portion of the gear case. Consequently, supportability is improved as compared with a structure in which each shaft is supported only at a front portion and a rear portion. As a result, flexion of the shaft is reduced or prevented when power transmission takes place, making it possible to ensure gear strength of the plurality of transmission gear trains disposed on the shafts and to substantially prevent gear noise.

Furthermore, the intermediate plate is bolt-fastened from the outside of the gear case toward the clutch housing, so that the transmission can be easily assembled. Specifically, for example, in a case where a vertical wall corresponding to the intermediate plate is provided on the gear case, if gear trains are provided on both sides of the vertical wall, following problems may arise: for example, the gear case needs to be divided, or the degree of freedom of a manufacturing procedure may be reduced due to restriction of an assembling direction of the gear train. These problems can be avoided through provision of an intermediate plate that is separate from the gear case.

Meanwhile, normally, a transmission of a front engine-front drive (FF) vehicle is assembled in the following manner: while a clutch housing is disposed on a pallet of an assembly line such that a matching surface with a power source side faces downward, components are assembled from above the clutch housing. The transmission of the present invention (hereinafter, also referred to as a transmission for an FR vehicle), which is to be longitudinally mounted, can be assembled in a similar manner. That is, while the clutch housing is disposed such that an end surface facing away from the gear case (i.e., a matching surface of a power source side) faces downward, a transmission unit including shafts and gear trains assembled to the shaft can be assembled from above the clutch housing (from the gear case). Thus, the transmission of the present invention can be assembled easily.

Thus, the transmission for the FF vehicle and the transmission for the FR vehicle can be manufactured using the same plant equipment, i.e., in a mixed flow production line. This feature makes it possible to reduce plant and equipment investment as compared with a case where the transmission for the FF vehicle and the transmission of the FR vehicle are manufactured using respective production facilities.

In the transmission of the vehicle, it is preferable that the transmission case houses a transmission operation rod, and the intermediate plate has a support that supports the transmission operation rod.

This configuration, in which the intermediate plate has the support that supports the transmission operation rod, eliminates the need to separately provide the gear case with a support for supporting the transmission operation rod, contributing to achieving a simple shape of the transmission case. Pre-assembling the transmission operation rod to the transmission unit including the gear trains and the like assembled to the shafts allows the transmission operation rod to be assembled to the clutch housing together with the transmission unit.

In the transmission of the vehicle, it is preferable that the intermediate plate has through holes to which the intermediate bearings are fitted, and protrusions for preventing the intermediate bearings from coming out from the through holes are provided at ends of inner peripheral surfaces of the through holes, the ends facing away from the clutch housing.

With this configuration, for example, in a state where the clutch housing is disposed on a pallet of an assembly line such that a surface of the clutch housing facing away from the gear case (i.e., the surface on the vehicle front side) faces downward, when the transmission unit including the gear trains and the like assembled to the shafts is loaded and assembled from above, the surfaces of the intermediate bearings away from the clutch housing and a flange of the intermediate plate can be vertically placed on top the other. That is, it is possible to maintain a state in which the intermediate plate is temporarily placed on the surfaces of the intermediate bearings facing away from the clutch housing (i.e., the surfaces on the vehicle rear side). This feature can facilitate loading and assembling.

According to an embodiment of the transmission of the vehicle, the shafts include an input shaft, an output shaft disposed coaxially with the input shaft, and a counter shaft disposed parallel to the input shaft and the output shaft, a rear end of the input shaft is internally fitted to a front end of the output shaft, the transmission is configured as an output reduction type transmission in which the plurality of transmission gear trains are disposed between the input shaft and the counter shaft and a reduction gear train is disposed between the output shaft and the counter shaft, and the intermediate plate is disposed on a side of the reduction gear train, the side facing the clutch housing.

This configuration, in which the shafts are supported by the transmission case, not only at the front portions and the rear portions of the shafts, but also by a bearing that is disposed in the vicinity of the reduction gear train receiving an especially heavy load, can effectively reduce or prevent flexion of the shafts.

The present invention also relates to a manufacturing method of a transmission of a vehicle, the transmission including a transmission case housing a transmission unit including shafts and a plurality of transmission gear trains, the transmission being configured such that the shafts extend in a front-to-rear direction of the vehicle when the transmission is mounted on a rear side of an engine which is longitudinally installed in the vehicle and the transmission case being of the two-segment type, in which the transmission case is divided into two segments, namely a clutch housing and a gear case, the gear case being provided at an intermediate portion thereof with an intermediate plate holding intermediate bearings, the intermediate bearings supporting the shafts. The manufacturing method includes the steps of: disposing the clutch housing such that a matching surface with the gear case faces upward; after the disposing of the clutch housing, assembling the transmission unit to the clutch housing from above the clutch housing; after the assembling of the transmission unit, placing the intermediate plate on surfaces of the intermediate bearings facing away from the clutch housing, the intermediate bearings having been incorporated in the transmission unit in advance; after the placing of the intermediate plate, assembling gear members from a side of the intermediate plate facing away from the clutch housing; and after the assembling of the gear members, assembling the gear case to the clutch housing such that the gear case encloses the transmission unit and an end surface of the gear case facing the clutch housing and an end surface of the clutch housing facing the gear case match with each other. In the assembling the gear case, the gear case is fastened to the clutch housing with a bolt inserted toward the clutch housing, and the intermediate plate is fastened to the gear case with a bolt inserted from outside of the gear case toward the clutch housing.

According to the method of the present invention, similarly to the transmission of the vehicle of the present invention, in a case where the shafts extending in the front-to-rear direction of the vehicle are each supported, at the front portion and rear portion of the shaft, by the transmission case divided into the clutch housing and the gear case, and where an intermediate portion of the shaft is supported on the intermediate bearing held by an intermediate plate provided in an intermediate portion of the gear case, the intermediate plate is bolt-fastened from the outside of the gear case toward the clutch housing. This feature facilitates the assembly of the transmission.

Specifically, for example, in a case where a vertical wall corresponding to the intermediate plate is provided on the gear case, if gear trains are provided on both sides of the vertical wall, following problems may arise: for example, the gear case needs to be divided, or the degree of freedom of a manufacturing procedure may be reduced due to restriction of an assembling direction of the gear train. These problems can be avoided through the provision of the intermediate plate that is separate from the gear case.

The clutch housing is disposed such that a matching surface with the gear case faces upward. The transmission unit is assembled to the clutch housing from above. Next, the intermediate plate is placed on surfaces of the intermediate bearings facing away from the clutch housing, the intermediate bearings having been incorporated in the transmission unit in advance. Thereafter, gear members are assembled from a side of the intermediate plate facing away from the clutch housing. The gear case is assembled to the clutch housing such that the gear case encloses the transmission unit and an end surface of the gear case facing the clutch housing and an end surface of the clutch housing facing the gear case match with each other. The gear case thus configured is fastened with a bolt inserted toward the clutch housing, and the intermediate plate is fastened with a bolt inserted from outside of the gear case toward the clutch housing.

With this configuration, in which the direction in which the bolt with which the gear case and the clutch housing are fastened together is inserted is the same as the direction in which the bolt with which the intermediate plate and the gear case are fastened together is inserted, allows the transmission unit, the intermediate plate, the gear member, the gear case, and other components to be assembled to the clutch housing from above.

As a result, the transmission for the FF vehicle and the transmission for the FR vehicle as the transmission of the present invention can be manufactured using the same plant equipment, i.e., in a mixed flow production line. In other words, the plant and equipment for the transmissions of FF vehicle, in which the transmissions are assembled from above, can be used for the manufacture of the transmissions of the present invention. This feature makes it possible to reduce plant and equipment investment as compared with a case where the transmission for the FF vehicle and the transmission of the FR vehicle are manufactured using respective production facilities.

### BRIEF DESCRIPTION OF THE DRAWINGS

FIG. 1 is a cross-sectional view of a transmission of a vehicle according to an embodiment of the present invention.
FIG. 2A illustrates an intermediate plate alone, the intermediate plate included in the transmission of FIG. 1.
FIG. 2B is a cross-sectional view taken along line A-A of FIG. 2A.
FIG. 3 is an explanatory view of a step in which an operation unit is sub-assembled to a transmission unit and the transmission unit is assembled to a clutch housing.
FIG. 4 is an explanatory view of a step in which the intermediate plate is assembled to the transmission unit.
FIG. 5 is an enlarged cross-sectional view of a main portion in a state after the intermediate plate has been assembled to the transmission unit.
FIG. 6 is an explanatory view of a step in which a rear end bearing is press-fitted into an output shaft and a counter shaft.
FIG. 7 is an explanatory view of a step in which a gear case is assembled to the clutch housing and a process in which the intermediate plate is fastened to the gear case.

### DETAILED DESCRIPTION

An embodiment of the present invention will be described below in detail with reference to the drawings.

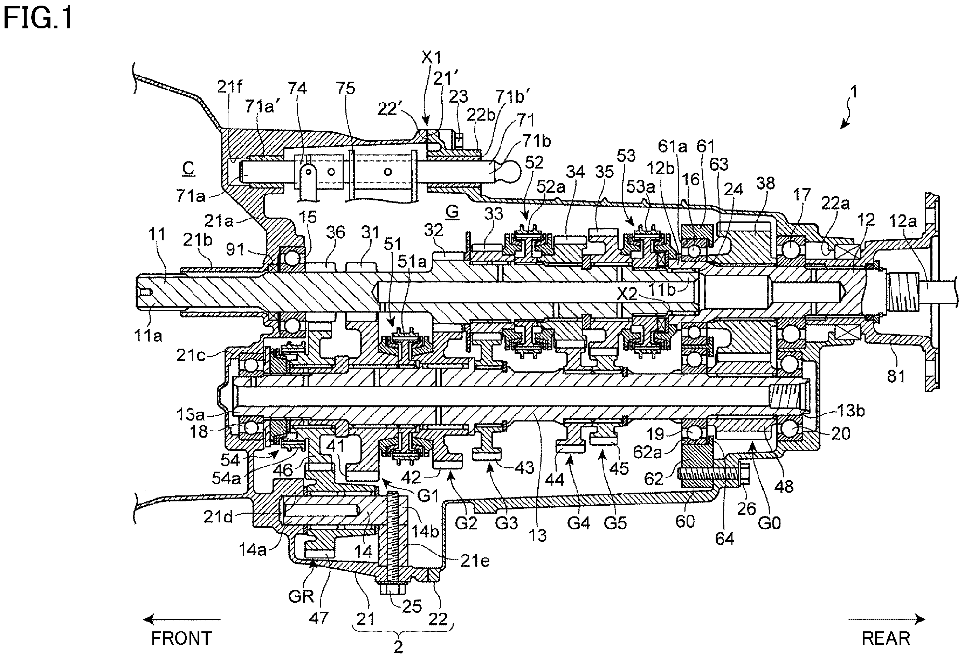

FIG. 1 illustrates a transmission 1 of a vehicle according to an embodiment of the present invention. The vehicle is an FR vehicle and the transmission 1 is an output reduction type manual transmission that is applicable to the FR vehicle. Hereinafter, the front and rear of the vehicle are simply referred to as front and rear, respectively.

The transmission 1 is configured to be mounted on an FR vehicle in which an engine as a power source is longitudinally installed. Specifically, the transmission 1 is configured to be mounted on a rear side of the engine, and includes a transmission case 2 comprised of a clutch housing 21 and a gear case 22. At a matching surface part X1 between a rear end surface 21' of the clutch housing 21 and a front end surface 22' of the gear case 22, a bolt 23 is inserted from the gear case 22 (rear side) toward the clutch housing 21 (front side), so that the clutch housing 21 and the gear case 22 are fastened to each other.

The clutch housing 21 includes a vertical wall 21a that separate a clutch chamber C that houses a clutch (not illustrated) from a gear chamber G that houses transmission gear trains and other components. The clutch is disconnected through depression of a clutch pedal by an occupant of the vehicle and is connected through returning of the clutch pedal.

The transmission case 2 houses an input shaft 11 to which driving force is input from a drive shaft of the engine via the clutch, an output shaft 12 disposed coaxially with the input shaft 11, a counter shaft 13 disposed below the input shaft 11 and the output shaft 12 and extending parallel to the shafts 11 and 12, and a reverse shaft 14 disposed between the input shaft 11 and the counter shaft 13 and extending parallel to the shafts 11 and 13. These shafts 11, 12, 13, and 14 extend in the front-to-rear direction.

The input shaft 11 has a front end 11a inserted into a cylindrical portion 21b extending frontward from the vertical wall 21a of the clutch housing 21. The input shaft 11 is rotatably supported by the vertical wall 21a of the clutch housing 21 via a front end bearing 15 disposed in the vicinity of the front end 11a.

The output shaft 12 has a rear end 12a inserted into an opening 22a provided at a rear end of the gear case 22. A flange member 81 for connecting a propeller shaft (not illustrated) is inserted between an outer peripheral surface of the rear end 12a of the output shaft 12 and an inner peripheral surface of the opening 22a of the gear case 22.

The output shaft 12 is rotatably supported by the gear case 22 via an intermediate bearing 16 and a rear end bearing 17 disposed on both sides in an axial direction of the output shaft 12 with respect to a reduction gear 38 to be described later. Thus, the output shaft 12 is supported by the transmission case 2 via the intermediate bearing 16 and the rear end bearing 17 disposed on both sides in the axial direction of the reduction gear 38, to which an especially heavy load is applied. This feature makes it possible to effectively reduce or prevent flexion of the output shaft 12.

The intermediate bearing 16 is press-fitted on the outer peripheral surface of the output shaft 12 such that the input shaft 11 and the output shaft 12 overlap with each other in the axial direction at a fitting part X2 between the input shaft 11 and the output shaft 12, so that the fitting part X2 between the input shaft 11 and the output shaft 12 is more reliably supported by the gear case 22. In addition, the intermediate bearing 16 is supported by the gear case 22 via an intermediate plate 60 to be described later.

A front end 12b of the output shaft 12 has a cylindrical shape and a rear end 11b of the input shaft 11 is inserted into the output shaft 12. Between the outer peripheral surface of the input shaft 11 and the inner peripheral surface of the output shaft 12, a bearing 24 such as a needle bearing is interposed, so that the input shaft 11 and the output shaft 12 are coupled together so as to be rotatable relative to each other.

The counter shaft 13 is supported by a boss portion 21c provided on the vertical wall 21a of the clutch housing 21 via a front end bearing 18 disposed on a front end 13a of the counter shaft 13. The counter shaft 13 is rotatably supported by the gear case 22 at a rear portion of the counter shaft 13 via an intermediate bearing 19 and a rear end bearing 20 disposed on both sides of a reduction gear 48 to be described later, the both sides facing each other in an axial direction of the counter shaft 13.

Thus, the counter shaft 13 is supported by the transmission case 2 via the intermediate bearing 19 and the rear end bearing 20 disposed on both sides in the axial direction of the reduction gear 48, to which an especially heavy load is applied. This feature makes it possible to effectively reduce or prevent flexion of the counter shaft 13. In addition, the intermediate bearing 19 is supported by the gear case 22 via the intermediate plate 60 to be described later.

The reverse shaft 14 is fixed to the clutch housing 21 at a front end 14a and a rear end 14b of the reverse shaft 14. The front end 14a of the reverse shaft 14 is supported by, and inserted into, a boss portion 21d provided on the vertical wall 21a of the clutch housing 21. The rear end 14b of the reverse shaft 14 is bolt-fastened to the clutch housing 21 via a support member 21e.

The support member 21e is comprised of a cylindrical member extending in a direction perpendicular to the axial direction of the reverse shaft 14 and filling a gap between an outer peripheral surface of the rear end 14b of the reverse shaft 14 and the inner surface of the clutch housing 21. The rear end 14b of the reverse shaft 14 is fixed to the clutch housing 21 via the support member 21e with the help of a bolt 25 that passes through the support member 21e from the outside of the clutch housing 21 and is screwed perpendicularly to the reverse shaft 14.

Between the input shaft 11 and the counter shaft 13, a reverse gear train GR, a first speed gear train G1, a second speed gear train G2, a third speed gear train G3, a fourth speed gear train G4, and a fifth speed gear train G5 are provided sequentially from the front side (the engine side).

The first to fifth gear trains G1, G2, G3, G4, and G5 for forward movement are disposed in a descending order of reduction gear ratio from the front side, and the reverse gear train GR is disposed adjacent to the vehicle body front side of the first speed gear train GR1.

Furthermore, between the output shaft 12 and the counter shaft 13, a reduction gear train G0 is provided. Note that since the transmission 1 is a six-speed direct-coupled transmission in which the input shaft 11 and the output shaft 12 are directly coupled to each other at the sixth speed, no sixth speed gear train is provided.

The first speed gear train G1 is comprised of a drive gear 31 formed integrally with the input shaft 11 and a driven gear 41 loosely fitted to the counter shaft 13. The second speed gear train G2 is comprised of a drive gear 32 formed integrally with the input shaft 11 and a driven gear 42 loosely fitted to the counter shaft 13. The third speed gear train G3 is comprised of a drive gear 33 loosely fitted to the input shaft 11 and a driven gear 43 fixed to the counter shaft 13. The fourth speed gear train G4 is comprised of a drive gear 34 loosely fitted to the input shaft 11 and a driven gear 44 fixed to the counter shaft 13. The fifth speed gear train G5 is comprised of a drive gear 35 loosely fitted to the input shaft 11 and a driven gear 45 fixed to the counter shaft 13. Note that the drive gears 31 to 35 of the first to fifth speed gear trains G1 to G5 for forward movement are constantly engaged with the driven gears 41 to 45, respectively.

The reverse gear train GR is comprised of a drive gear 36 fixed to the input shaft 11, a driven gear 46 fixed to the counter shaft 13, and an idle gear 47 rotatably fitted to the reverse shaft 14 and engaging with both the drive gear 36 and the driven gear 46.

The reduction gear train G0 is comprised of the reduction gear 38 fixed to the output shaft 12 and a reduction counter gear 48 fixed to the counter shaft 13 and engaging with the reduction gear 38.

Furthermore, a first and second speed synchronizer 51 is disposed between the first speed driven gear 41 and the second speed driven gear 42 that are loosely fitted to the counter shaft 13. A third and fourth speed synchronizer 52 is disposed between the third speed drive gear 33 and the fourth speed drive gear 34 that are loosely fitted to the input shaft 11. A fifth and sixth speed synchronizer 53 is disposed at a position adjacent to the rear side of the first speed drive gear 35 loosely fitted to the input shaft 11. Any one of sleeves 51a, 52a, and 53a of these synchronizers 51, 52, and 53 is slid in the axial direction thereof in response to operation of a change lever by the occupant of the vehicle, and a loosely fitted gear which is located on a side toward which the sleeve is slid becomes fixed to the input shaft 11 or the counter shaft 13, so that a gear train including the gear fixed enters a power transmission state.

In addition, at the sixth speed, the fifth and sixth speed synchronizer 53 is slid rearward, so that the input shaft 11 and the output shaft 12 are directly coupled to each other, and thus, the input shaft 11 and the output shaft 12 enter the power transmission state.

A reverse synchronizer 54 is disposed at a position adjacent to the front side of the reverse driven gear 46 loosely fitted to the counter shaft 13. The reverse synchronizer 54 is slid in the axial direction in response to operation of the change lever by the occupant, so that the reverse driven gear 46 is fixed to the counter shaft 13, and thus, the reverse gear train GR enters the power transmission state.

As illustrated in FIGS. 1, 3, and 4, the transmission case 2 houses a first control rod 71, a second control rod 72, and a reverse control rod 73 as transmission operation rods. The control rods 71, 72, and 73 are configured to move in the axial direction thereof and to be pivoted around the axes thereof in conjunction with operation of the change lever by the occupant.

The first control rod 71 and the second control rod 72 are disposed to extend in the front-to-rear direction and parallel to the input shaft 11 and the counter shaft 13. The reverse control rod 73 is disposed to extend in the front-to-rear direction and parallel to the reverse shaft 14.

The first control rod 71 is disposed to protrude rearward by passing through the gear case 22 of the transmission case 2. The first control rod 71 is rotatably and slidably supported by a front end 71a and a rear end 71b thereof. The front end 71a of the first control rod 71 is supported by a boss portion 21f provided on the vertical wall 21a of the clutch housing 21 via, for example, a metal bush 71a'. The rear end 71b of the first control rod 71 is supported by a support portion 22b provided on an upper portion of the gear case 22 via, for example, a metal bush 71b'.

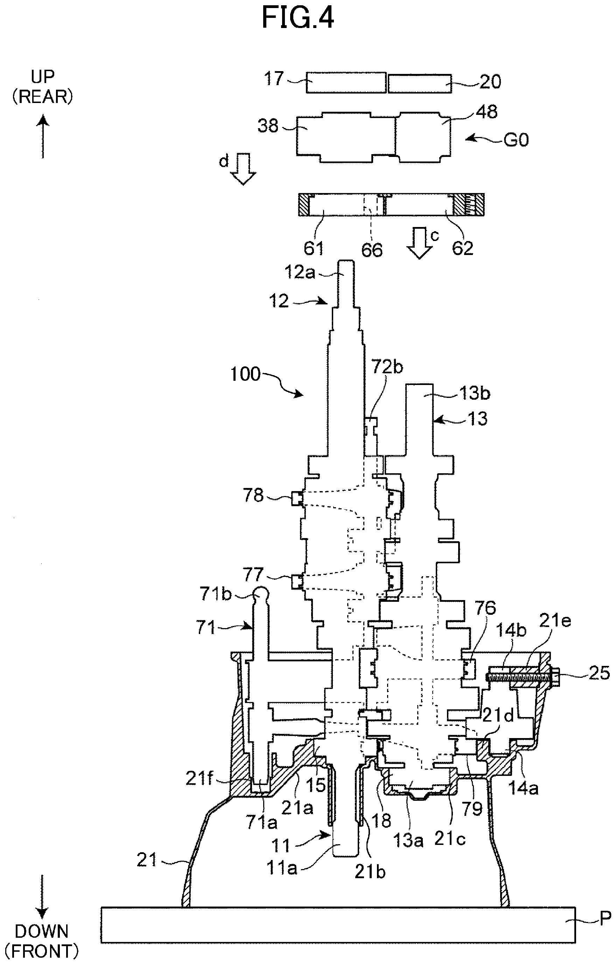

The second control rod 72 is rotatably and slidably supported at a front end 72a and a rear end 72b thereof. The front end 72a of the second control rod is supported by a boss portion provided on the vertical wall 21a of the clutch housing 21 via, for example, a metal bush, similarly to the first control rod 71. The rear end 72b of the second control rod 72 is supported by an insertion hole 66 (see FIG. 4) formed in the intermediate plate 60 to be described later via, for example, a metal bush. This feature eliminates the need to separately provide the gear case 22 with a support for supporting the rear end 72b of the second control rod 72, contributing to achieving a simple shape of the gear case 22.

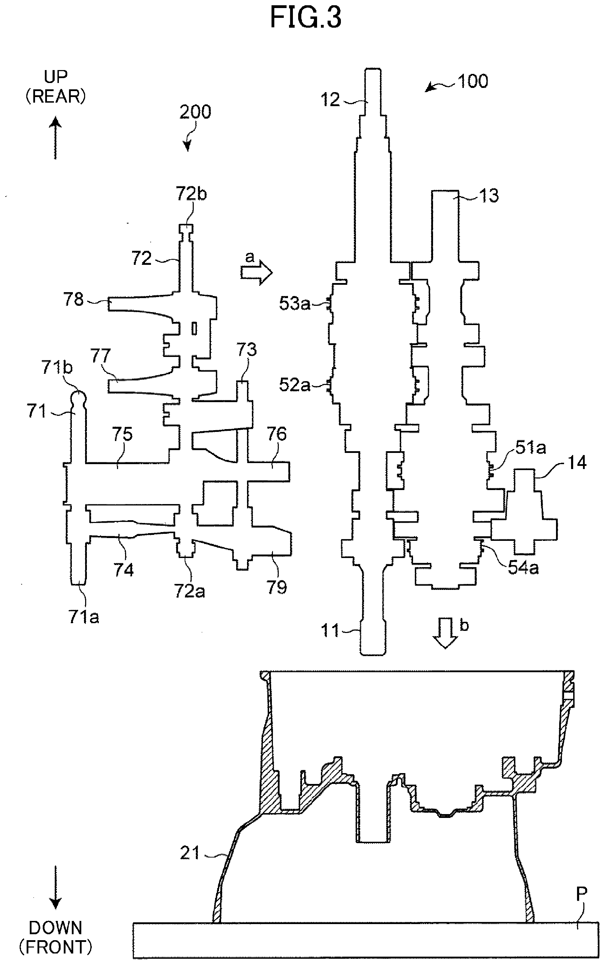

As illustrated in FIG. 3, the first control rod 71 and the second control rod 72 are connected to each other via a shift interlock mechanism 74 and a select interlock mechanism 75.

The second control rod 72 is provided with shift forks 76, 77, and 78 that allow the sleeves 51a, 52a, and 53a of the aforementioned synchronizers 51, 52, and 53 to slide in the axial direction of the input shaft 11 or the counter shaft 13 in conjunction with a shift operation and a select operation of the change lever. The reverse control rod 73 is provided with a shift fork 79 that allows a sleeve 54a of the reverse synchronizer 54 to slide in the axial direction of the counter shaft 13 in conjunction with a reverse operation of the change lever.

When the input shaft 11 and the output shaft 12 are regarded as a single shaft, the single shaft is supported at three points by the front end bearing 15 and the rear end bearing 17 disposed at positions corresponding to the front and rear portions of the single shaft and by the intermediate bearing 16 disposed in an intermediate portion of the gear case 22. This configuration reduces or prevents flexion of the input shaft 11 and the output shaft 12 when power transmission takes place. Furthermore, the counter shaft 13 is supported at three points by the front end bearing 18 and the rear end bearing 20 disposed at positions corresponding to the front and rear portions of the counter shaft 13 and by the intermediate bearing 19 disposed in an intermediate portion of the gear case 22. This configuration reduces or prevents flexion of the counter shaft 13 when power transmission takes place.

As can be seen, the intermediate bearings 16 and 19 are disposed in the intermediate portion of the transmission 1. For this purpose, the intermediate plate 60 for supporting the intermediate bearings 16 and 19 is provided in the transmission case 2. The intermediate plate 60 is bolt-fastened with a bolt 26 inserted toward the front side (toward the clutch housing 21) from the rear side (outside) of the gear case 22.

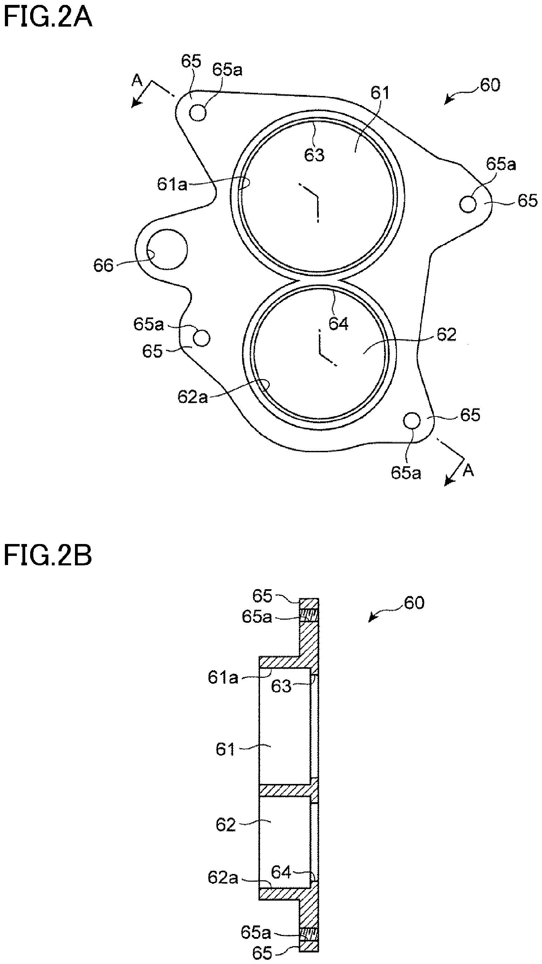

The intermediate plate 60 will be now described with reference to FIGS. 2A and 2B.

The intermediate plate 60 has holes 61 and 62 allowing the output shaft 12 and the counter shaft 13 to be inserted therethrough and supporting the intermediate bearings 16 and 19 that support the shafts 12 and 13.

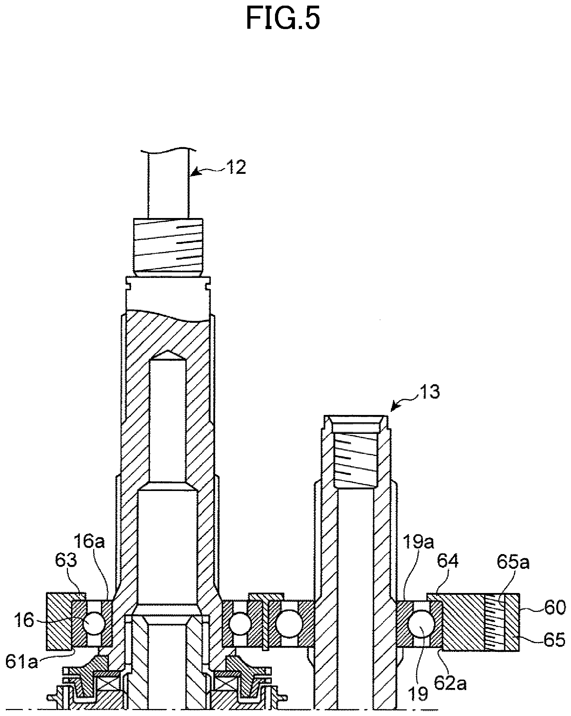

At a rear end (facing away from the clutch housing 21) of inner peripheral surfaces 61a and 62a of the through holes 61 and 62, annular protrusions 63 and 64 are formed to protrude radially inward of the through holes 61 and 62 and to extend over the inner peripheral surfaces 61a and 62a. The intermediate bearings 16 and 19 are fitted on the inner peripheral surfaces 61a and 62a of the through holes 61 and 62, respectively. The inside diameters of the protrusions 63 and 64 are smaller than the outside diameters of the intermediate bearings 16 and 19, respectively. This configuration allows rear surfaces 16a and 19a (see FIG. 5) of the intermediate bearings 16 and 19 to abut against the protrusions 63 and 64 to prevent the intermediate bearings 16 and 19 from coming out of the through holes 61 and 62.

The intermediate plate 60 is provided with a plurality of fastening portions 65 for fixing the intermediate plate 60 to the gear case 22 and each of the fastening portions 65 has a screw hole 65a.

Furthermore, the intermediate plate 60 has an insertion hole 66 for supporting the rear end 72b of the second control rod 72. The insertion hole 66 corresponds to a support for supporting the second control rod 72 (the transmission operation rod).

Next, a manufacturing method of the transmission 1 of the vehicle according to the present embodiment will be described with reference to FIGS. 3 to 7. Note that FIGS. 3 to 7 illustrate the components of the transmission 1 such that the rear side of the transmission 1 mounted on the vehicle faces upward and the front side of the transmission 1 mounted on the vehicle faces downward.

First, as illustrated in FIG. 3, in an assembly line, the clutch housing 21 is disposed on a pallet P such that a matching surface side (front side) of the clutch housing 21 with the engine faces downward and a matching surface side (rear side) of the clutch housing 21 with the gear case 22 faces upward. Thus, manufacture of the transmission 1 is ready to be started.

A seal member 91 for sealing a gap between the clutch housing 21 and the input shaft 11 and the front end bearing 15 are press-fitted on the input shaft 11 and the front end bearing 18 is press-fitted on the counter shaft 13 (see FIG. 1).

Furthermore, the reverse gear train GR, the first to fifth speed gear trains G1 to G5, the synchronizers 51 to 54, and other components are assembled to the input shaft 11 and the counter shaft 13. The idle gear 47 is assembled to the reverse shaft 14.

Moreover, the needle bearing 24 is press-fitted to the outer periphery of the rear end of the input shaft 11 and the output shaft 12 is fitted to the outer periphery of the needle bearing 24. Thereafter, the intermediate bearing 16 is press-fitted on the outer peripheral surface of the output shaft 12 such that the input shaft 11 and the output shaft 12 overlap with each other in the axial direction at the fitting part X2 between the input shaft 11 and the output shaft 12. In this way, the fitting part X2 between the input shaft 11 and the output shaft 12 is more reliably supported.

The intermediate bearing 19 is press-fitted on the outer peripheral surface of the counter shaft 13 at a position corresponding to the intermediate bearing 16 in the axial direction of the counter shaft 13.

In this manner, a transmission unit 100 is completed. Note that for the sake of convenience, FIGS. 1 and 3 illustrate the reverse shaft 14 in a developed state.

Subsequently, an operation unit 200 is assembled to the transmission unit 100 from the lateral side as indicated by the arrow a in FIG. 3. The operation unit 200 includes the first and second control rods 71 and 72, the reverse control rod 73, the shift and select interlock mechanisms 74 and 75, the shift forks 76, 77, 78, and 79, and other components that have been pre-assembled together. Note that the operation unit 200 is assembled such that the shift forks 76, 77, 78, and 79 correspond to the sleeves 51a, 52a, 53a, and 54a of the synchronizers 51, 52, 53, and 54 of the transmission unit 100, respectively. Pre-assembling the operation unit 200 to the transmission unit 100 in this manner allows the operation unit 200 to be assembled to the clutch housing 21 together with the transmission unit 100.

Next, as indicated by the arrow b in FIG. 3, the transmission unit 100 assembled with the operation unit 200 is assembled to the clutch housing 21 disposed on the pallet P of the assembly line from above the clutch housing 21.

Specifically, as illustrated in FIG. 4, the front end 11a of the input shaft 11 of the transmission unit 100 is inserted into the cylindrical portion 21b provided on the vertical wall 21a of the clutch housing 21. Subsequently, the front end bearing 15 of the input shaft 11, the front end bearing 18 of the counter shaft 13, the front end 14a of the reverse shaft 14, and the front end 71a of the first control rod 71 of the operation unit 200 are assembled to the cylindrical portion 21b provided on the vertical wall 21a of the clutch housing 21 and the boss portions 21c, 21d, and 21f, respectively.

Next, the support member 21e is inserted between the rear end 14b of the reverse shaft 14 and the clutch housing 21, and the fastening bolt 25 is inserted into the screw hole formed in the rear end 14b of the reverse shaft 14 in a direction perpendicular to the axis of the reverse shaft 14 through the support member 21e from the outside of the clutch housing 21. In this way, the reverse shaft 14 is fixed to the clutch housing 21.

Subsequently, as indicated by the arrow c in FIG. 4, the intermediate plate 60 is installed from above the transmission unit 100 such that the output shaft 12 and the counter shaft 13 of the transmission unit 100 penetrate the intermediate plate 60.

Specifically, the rear end 12a of the output shaft 12 is inserted into the through hole 61 of the intermediate plate 60, the rear end 13b of the counter shaft 13 is inserted into the through hole 62 of the intermediate plate 60, and the rear end 72b of the second control rod 72 is inserted into the through hole 66 of the intermediate plate 60.

As illustrated in FIG. 5, the intermediate plate 60 is assembled such that the intermediate bearing 16 of the output shaft 12 and the intermediate bearing 19 of the counter shaft 13 are disposed on the inner peripheral surfaces 61a and 62a of the through holes 61 and 62 of the intermediate plate 60, respectively. The protrusions 63 and 64 abut against the surfaces (upper surfaces) of the intermediate bearings 16 and 19 facing away from the clutch housing. The intermediate plate 60 enters a state of being placed on the surfaces of the intermediate bearings 16 and 19 facing away from the clutch housing (a temporary placement state).

As can be seen, even when the intermediate plate 60 is assembled from above, the temporary placement state of the intermediate plate 60 can be maintained by the protrusions 63 and 64 of the intermediate plate 60.

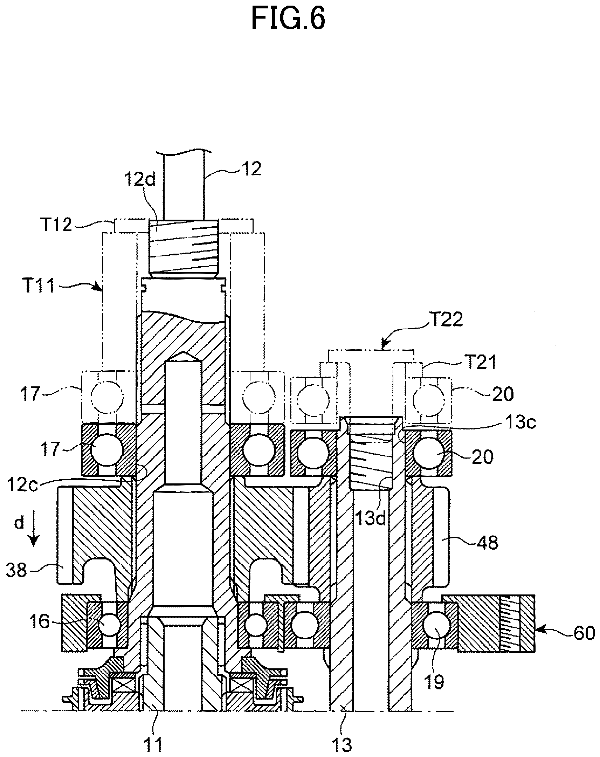

Thereafter, as indicated by the arrow d in each of FIGS. 4 and 6, the reduction gears 38 and 48 are spline-fitted to the output shaft 12 and the counter shaft 13, respectively. Further, the rear end bearings 17 and 20 respectively supporting the rear portions of the shafts 12 and 13 are press-fitted using a bearing press-in jig.

Specifically, as indicated by virtual lines in FIG. 6, the rear end bearing 17 of the output shaft 12 is inserted from the upper end of the output shaft 12 and moved to reach a positon before a press-fitting portion 12c of the rear end bearing 17 provided on the output shaft 12, and is temporarily placed.

Subsequently, a sleeve member T11 of the bearing press-in jig is placed, from above, on the rear end bearing 17 in the temporary placement state, and a lock nut T12 having a diameter radially overlapping with an upper end surface of the sleeve member T11 is fastened to a screw part 12d provided at the rear end 12a (here, the upper end) of the output shaft 12.

In this way, as the lock nut T12 is fastened, the sleeve member T11 is pressed downward and the rear end bearing 17 against which the sleeve member T11 abuts is press-fitted to the press-fitting part 12c of the output shaft 12. After the press-fitting of the rear end bearing 17 is completed, the sleeve member T11 and the lock nut T12 are removed from the output shaft 12.

As indicated by the virtual lines of FIG. 6, the rear end bearing 20 of the counter shaft 13 is inserted from the upper end of the counter shaft 13 and moved to reach a position before a press-fitting portion 13c of the rear end bearing 20 provided on the counter shaft 13, and is temporarily placed.

Subsequently, a washer T21 of the bearing press-in jig is placed, from above, on the rear end bearing 20 in the temporary placement state, and a bolt T22 is screwed into a screw hole 13d formed axially inward from the rear end surface (here, the upper end surface) of the counter shaft 13.

In this way, the washer T21 is pressed downward by a seat surface of the bolt T22, and the rear end bearing 20 abutting against the washer T21 is press-fitted to the press-fitting part 13c. After the press-fitting of the rear end bearing 20 is completed, the washer T21 and the bolt T22 are removed from the counter shaft 13.

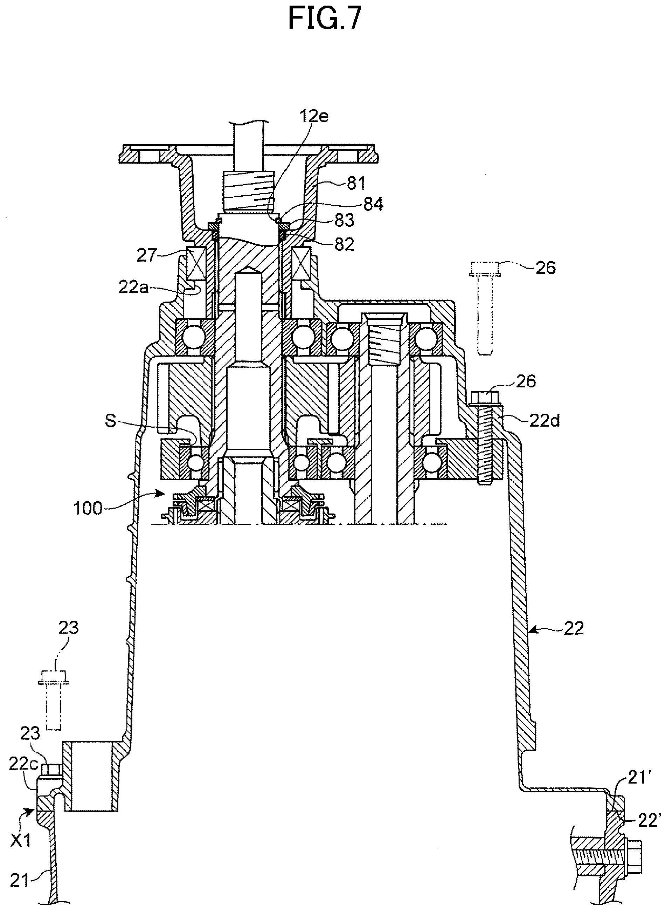

Next, as illustrated in FIG. 7, the gear case 22 is assembled to the clutch housing 21 from above the transmission unit 100 such that the gear case 22 encloses the transmission unit 100 and the rear end surface 21' of the clutch housing 21 and the front end surface 22' of the gear case 22 match with each other (i.e., the matching surface X1 is formed).

Specifically, the gear case 22 is placed on the rear end surface 21' of the clutch housing 21, and then the bolts 23 are respectively screwed into a plurality of fastening portions 22c provided in the matching surface portion X1 between the gear case 22 and the clutch housing 21 from above of the fastening portions 22c (i.e., from the outside of the gear case 22) toward the clutch housing 21. In this way, the gear case 22 is fastened and coupled to the clutch housing 21.

Before, after, or simultaneously with the fastening and coupling, bolts 26 are respectively inserted into a plurality of coupling portions 22d for the intermediate plate 60 provided at the rear portion of the gear case 22 from above the coupling portions 22d (i.e., from the outside of the gear case 22) toward the clutch housing 21. The bolts 26 are then screwed into the plurality of screw holes 65a of the intermediate plate 60, so that the intermediate plate 60 is fastened and coupled to the gear case 22 with the bolts 26.

Since the intermediate plate 60 is pulled up toward the gear case 22 (upper side) when the bolts 26 are fastened, a gap S is provided in the axial direction between the protrusion 63 and the intermediate bearing 16 and between the protrusion 64 and the intermediate bearing 19, respectively.

Thereafter, the flange member 81 for connecting the propeller shaft is inserted from the rear end side (upper side) of the output shaft 12. Note that an oil seal 27 is fitted into the opening 22a in the rear end of the gear case 22. Therefore, the flange member 81 is press-fitted to pass between the inner peripheral surface of the oil seal 27 and the outer peripheral surface of the output shaft 12 so as to reach the rear end surface of the rear end bearing 17.

An O-ring 82 is interposed between the outer peripheral surface of the output shaft 12 and the inner peripheral surface of the flange member 81. Further, a washer 83 is set on the rear side (upper side) of the O-ring 82. On the rear end surface (upper side) of the washer 83, a snap ring 84 is fitted into a circumferential groove 12e formed in the outer peripheral surface of the output shaft 12. In this way, the flange member 81 is prevented from coming out, thereby completing the manufacturing of the transmission 1.

Since the input shaft 11 and the output shaft 12 extending in the front-to-rear direction of the transmission 1 are supported by the transmission case 2 via the intermediate bearing 16 and the intermediate plate 60 provided at the fitting part X2 between the input shaft 11 and the output shaft 12, in addition to the front end bearing 15 provided at the front end 11a of the input shaft 11 and the rear end bearing 17 provided at the rear end 12a of the output shaft 12, the supportability of the shafts 11 and 12 is improved as compared with a structure in which these shafts 11 and 12 are supported only at a front portion and a rear portion.

Consequently, flexion which may occur in the shafts 11 and 12 when power transmission takes place is reduced or prevented, making it possible to ensure gear strength of the plurality of gear trains G1 to G5, GR, and G0 disposed on the shafts 11 and 12 and to substantially prevent gear noise. The same effects are obtained for the counter shaft 13.

Meanwhile, normally, a transmission of an FF vehicle is assembled in the following manner: While a clutch housing is disposed on a pallet of an assembly line such that a matching surface with a power source side faces downward, components are assembled from above the clutch housing. The transmission 1 of the present embodiment can be assembled in a similar manner. Thar is, while the clutch housing 21 is disposed such that an end surface facing away from the gear case (i.e., a matching surface of a power source side) faces downward, the transmission unit 100 can be assembled from above the clutch housing 21 (from the gear case 22). Thus, the transmission 1 of the present embodiment can be assembled easily.

Thus, the transmission for the FF vehicle and the transmission 1 for the FR vehicle can be manufactured using the same plant equipment, i.e., in a mixed flow production line. This feature makes it possible to reduce plant and equipment investment as compared with a case where the transmission for the FF vehicle and the transmission 1 are manufactured using respective production facilities.

The through holes 61 and 62 of the intermediate plate 60, into which the intermediate bearings 16 and 19 are fitted, have the protrusions 63 and 64 for preventing the intermediate bearings 16 and 19 from coming out, the protrusions 63 and 64 provided around the surfaces of the through holes 61 and 62 facing away from the clutch housing 21. Therefore, when the transmission unit 100 is assembled from above the clutch housing 21 in a state where the clutch housing 21 is disposed on the pallet P of the assembly line such that its surface facing away from the gear case 22 (i.e., the front surface) faces downward, the surfaces 16a and 19a of the intermediate bearings 16 and 19 away from the clutch housing 21 and the protrusions 63 and 64 of the intermediate plate 60 can be vertically placed on top the other. That is, it is possible to maintain a state in which the intermediate plate 60 is temporarily placed on the surfaces 16a and 19a (rear surfaces) of the intermediate bearings 16 and 19, the surfaces 16a and 19a facing away from the clutch housing 21. This feature facilitates the assembly of the intermediate plate 60.

The aforementioned embodiment is a mere example and it should be noted that the scope of the present invention is not construed in a limited manner. The scope of the present invention is defined by the appended claims.

## Claims

1. A transmission (1) of a vehicle, the transmission (1) comprising a transmission case (2) that houses a transmission unit (100) including shafts (11, 12, 13) and a plurality of transmission gear trains (G1 to G5, GR), wherein
the transmission (1) is configured such that the shafts (11, 12, 13) extend in a front-to-rear direction of the vehicle when the transmission is mounted on a rear side of an engine which is longitudinally installed in the vehicle,
each of the shafts (11, 12, 13) is supported by the transmission case (2) at a front portion and a rear portion of the shaft,
the transmission case (2) is of the two-segment type, in which the transmission case (2) is divided into two segments, namely a clutch housing (21) and a gear case (22),
the gear case (22) is provided at an intermediate portion thereof with an intermediate plate (60) holding intermediate bearings (16, 19), the intermediate bearings (16, 19) supporting the shafts (11, 12, 13), and
the intermediate plate (60) is bolt-fastened to the gear case (22) with a bolt (26) inserted from outside of the gear case (22) toward the clutch housing (21).

2. The transmission of claim 1, wherein
the transmission case (2) houses a transmission operation rod (72), and
the intermediate plate (60) has a support (66) that supports the transmission operation rod (72).

3. The transmission of claim 1 or 2, wherein
the intermediate plate (60) has through holes (61, 62) to which the intermediate bearings (16, 19) are fitted, and
protrusions (63, 64) for preventing the intermediate bearings (16, 19) from coming out from the through holes (61, 62) are provided at ends of inner peripheral surfaces of the through holes (61, 62), the ends facing away from the clutch housing (21).

4. The transmission of any one of claims 1 to 3, wherein
the shafts (11, 12, 13) include an input shaft (11), an output shaft (12) disposed coaxially with the input shaft (11), and a counter shaft (13) disposed parallel to the input shaft (11) and the output shaft (12),
a rear end of the input shaft (11) is internally fitted to a front end of the output shaft (12),
the transmission (1) is configured as an output reduction type transmission in which the plurality of transmission gear trains (G1 to G5, GR) are disposed between the input shaft (11) and the counter shaft (13) and a reduction gear train (G0) is disposed between the output shaft (12) and the counter shaft (13), and
the intermediate plate (60) is disposed on a side of the reduction gear train (G0), the side facing the clutch housing (21).

5. A manufacturing method of a transmission (1) of a vehicle, the transmission (1) including a transmission case (2) housing a transmission unit (100) including shafts (11, 12, 13) and a plurality of transmission gear trains (G1 to G5, GR), the transmission (1) being configured such that the shafts (11, 12, 13) extend in a front-to-rear direction of the vehicle when the transmission is mounted on a rear side of an engine which is longitudinally installed in the vehicle and the transmission case (2) being of the two-segment type, in which the transmission case (2) is divided into two segments, namely a clutch housing (21) and a gear case (22), the gear case (22) being provided at an intermediate portion thereof with an intermediate plate (60) holding intermediate bearings (16, 19), the intermediate bearings (16, 19) supporting the shafts (11, 12, 13), the manufacturing method comprising the steps of:
disposing the clutch housing (21) such that a matching surface with the gear case (22) faces upward;
after the disposing of the clutch housing (21), assembling the transmission unit (100) to the clutch housing (21) from above the clutch housing (21);
after the assembling of the transmission unit (100), placing the intermediate plate (60) on surfaces of the intermediate bearings (16, 19) facing away from the clutch housing (21), the intermediate bearings (16, 19) having been incorporated in the transmission unit (100) in advance;
after the placing of the intermediate plate (60), assembling gear members (38, 48) from a side of the intermediate plate (60) facing away from the clutch housing (21); and
after the assembling of the gear members (38, 48), assembling the gear case (22) to the clutch housing (21) such that the gear case (22) encloses the transmission unit (100) and an end surface of the gear case (22) facing the clutch housing (21) and an end surface of the clutch housing (21) facing the gear case (22) match with each other, wherein
in the assembling the gear case (22), the gear case (22) is fastened to the clutch housing (21) with a bolt (23) inserted toward the clutch housing (21), and the intermediate plate (60) is fastened to the gear case (22) with a bolt (26) inserted from outside of the gear case (22) toward the clutch housing (21).

## Patentansprüche

1. Getriebe (1) eines Fahrzeugs, wobei das Getriebe (1) ein Getriebegehäuse (2) umfasst, das eine Getriebeeinheit (100) mit Wellen (11, 12, 13) und mehreren Getriebezügen (G1 bis G5, GR) aufnimmt, wobei
das Getriebe (1) so konfiguriert ist, dass sich die Wellen (11, 12, 13) in einer Richtung des Fahrzeugs von vorne nach hinten erstrecken, wenn das Getriebe an einer Rückseite eines Motors montiert ist, der in dem Fahrzeug in Längsrichtung eingebaut ist,
jede der Wellen (11, 12, 13) an einem vorderen Abschnitt und einem hinteren Abschnitt der Welle von dem Getriebegehäuse (2) gelagert wird,
das Getriebegehäuse (2) von Zwei-Segment-Ausführung ist, bei der das Getriebegehäuse (2) in zwei Segmente unterteilt ist, nämlich ein Kupplungsgehäuse (21) und ein Zahnradgehäuse (22),
das Zahnradgehäuse (22) an einem Zwischenabschnitt desselben mit einer eine Zwischenplatte (60) versehen ist, die Zwischenlager (16, 19) hält, wobei die Zwischenlager (16, 19) die Wellen (11, 12, 13) lagern und
die Zwischenplatte (60) mit dem Zahnradgehäuse (22) mit einem Bolzen (26) verbolzt ist, der von der Außenseite des Zahnradgehäuses (22) hin zum Kupplungsgehäuse (21) eingeführt ist.

2. Getriebe nach Anspruch 1, wobei
das Getriebegehäuse (2) eine Getriebebetätigungsstange (72) aufnimmt
und
die Zwischenplatte (60) eine Stütze (66) aufweist, die die Getriebebetätigungsstange (72) stützt.

3. Getriebe nach Anspruch 1 oder 2, wobei
die Zwischenplatte (60) Durchgangslöcher (61, 62) aufweist, an die die Zwischenlager (16, 19) montiert sind, und
Vorsprünge (63, 64) zum Verhindern, dass die Zwischenlager (16, 19) aus den Durchgangslöchern (61, 62) treten, an Enden von Innenumfangsflächen der Durchgangslöcher (61, 62) vorgesehen sind, wobei die Enden weg von dem Kupplungsgehäuse (21) weisen.

4. Getriebe nach einem der Ansprüche 1 bis 3, wobei
die Wellen (11, 12, 13) eine Eingangswelle (11), eine Ausgangswelle (12), die koaxial mit der Eingangswelle (11) angeordnet ist, und eine Vorgelegewelle (13), die parallel zur Eingangswelle (11) und der Ausgangswelle (12) angeordnet ist, umfassen,
ein hinteres Ende der Eingangswelle (11) innen an ein vorderes Ende der Ausgangswelle (12) montiert ist,
das Getriebe (1) als Getriebe des Typs Ausgangsreduzierung konfiguriert ist, wobei die mehreren Getriebezüge (G1 bis G5, GR) zwischen der Eingangswelle (11) und der Vorgelegewelle (13) angeordnet sind und ein Reduktionsgetriebezug (G0) zwischen der Ausgangswelle (12) und der Vorgelegewelle (13) angeordnet ist und
die Zwischenplatte (60) an einer Seite des Reduktionsgetriebezugs (G0) angeordnet ist, wobei die Seite zum Kupplungsgehäuse (21) weist.

5. Herstellungsverfahren für ein Getriebe (1) eines Fahrzeugs, wobei das Getriebe ein Getriebegehäuse (2), das eine Getriebeeinheit (100) mit Wellen (11, 12, 13) und mehreren Getriebezügen (G1 bis G5, GR) aufnimmt, umfasst, wobei das Getriebe (1) so konfiguriert ist, dass sich die Wellen (11, 12, 13) in einer Richtung des Fahrzeugs von vorne nach hinten erstrecken, wenn das Getriebe an einer Rückseite eines Motors montiert ist, der in dem Fahrzeug in Längsrichtung eingebaut ist, und wobei das Getriebegehäuse (2) von der Zwei-Segment-Ausführung ist, bei der das Getriebegehäuse (2) in zwei Segmente unterteilt ist, nämlich ein Kupplungsgehäuse (21) und ein Zahnradgehäuse (22), wobei das Zahnradgehäuse (22) an einem mittleren Abschnitt desselben mit einer Zwischenplatte (60) versehen ist, die Zwischenlager (16, 19) hält, wobei die Zwischenlager (16, 19) die Wellen (11, 12, 13) lagern, wobei das Herstellungsverfahren die folgenden Schritte umfasst:
Anordnen des Kupplungsgehäuses (21) so, dass eine dem Zahnradgehäuse (22) entsprechende Fläche nach oben weist;
nach dem Anordnen des Kupplungsgehäuses (21) Anbauen der Getriebeeinheit (100) an dem Kupplungsgehäuse (21) von oberhalb des Kupplungsgehäuses (21);
nach dem Anbauen der Getriebeeinheit (100) Absetzen der Zwischenplatte (60) auf Oberflächen der Zwischenlager (16, 19), die von dem Kupplungsgehäuse (21) weg weisen, wobei die Zwischenlager (16, 19) vorab in die Getriebeeinheit (100) integriert wurden;
nach dem Absetzen der Zwischenplatte (60) Einbauen von Zahnradelementen (38, 48) von einer Seite der Zwischenplatte (60), die von dem Kupplungsgehäuse (21) weg weist; und
nach dem Einbauen der Zahnradelemente (38, 48) Anbauen des Zahnradgehäuses (22) an dem Kupplungsgehäuse (21), so dass das Zahnradgehäuse (22) die Getriebeeinheit (100) umfängt und eine Endfläche des Zahnradgehäuses (22), die zum Kupplungsgehäuse (21) weist, und eine Endfläche des Kupplungsgehäuses (21), die zum Zahnradgehäuse (22) weist, miteinander übereinstimmen, wobei
bei dem Anbauen des Zahnradgehäuses (22) das Zahnradgehäuse (22) mit einem Bolzen (23), der hin zum Kupplungsgehäuse (21) eingeführt ist, an dem Kupplungsgehäuse (21) befestigt wird und die Zwischenplatte (60) mit einem Bolzen (26), der von außerhalb des Zahnradgehäuses (22) hin zu dem Kupplungsgehäuse (21) eingeführt wird, an dem Zahnradgehäuse (22) befestigt wird.

## Revendications

1. Boîte de vitesse (1) pour véhicule, la boîte de vitesse (1) comprenant un carter de boîte de vitesse (2) qui renferme une unité de boîte de vitesse (100) comportant des arbres (11, 12, 13) et une pluralité de trains d'engrenages de boîte de vitesse (G1 à G5, GR), dans laquelle
la boîte de vitesse (1) est conçue de telle manière que les arbres (11, 12, 13) s'étendent dans une direction de l'avant vers l'arrière du véhicule quand la boîte de vitesse est montée sur un côté arrière d'un moteur qui est installé dans véhicule dans le sens longitudinal,
chacun des arbres (11, 12, 13) est supporté par le carter de boîte de vitesse (2) sur une partie avant et une partie arrière de l'arbre,
le carter de boîte de vitesse (2) est de type à deux segments, dans lequel le carter de boîte de vitesse (2) est divisé en deux segments, à savoir un carter d'embrayage (21) et un carter d'engrenages (22),
le carter d'engrenages (22) est pourvu, sur une partie intermédiaire de celui-ci, d'une plaque intermédiaire (60) portant des paliers intermédiaires (16, 19), les paliers intermédiaires (16, 19) supportant les arbres (11, 12, 13), et
la plaque intermédiaire (60) est boulonnée sur le carter d'engrenages (22) au moyen d'un boulon (26) inséré depuis l'extérieur du carter d'engrenages (22) en direction du carter d'embrayage (21).

2. Boîte de vitesse selon la revendication 1, dans laquelle
le carter de boîte de vitesse (2) renferme une tige d'actionnement de boîte de vitesse (72), et la plaque intermédiaire (60) comporte un support (66) qui supporte la tige d'actionnement de boîte de vitesse (72).

3. Boîte de vitesse selon la revendication 1 ou 2, dans laquelle
la plaque intermédiaire (60) comporte des trous débouchants (61, 62) sur lesquels les paliers intermédiaires (16, 19) sont installés, et
des saillies (63, 64) servant à empêcher les paliers intermédiaires (16, 19) de sortir des trous débouchants (61, 62) sont prévues sur des extrémités de surfaces périphériques intérieures des trous débouchants (61, 62), les extrémités étant orientées dans la direction opposée au carter d'embrayage (21).

4. Boîte de vitesse selon l'une quelconque des revendications 1 à 3, dans laquelle
les arbres (11, 12, 13) comprennent un arbre d'entrée (11), un arbre de sortie (12) disposé de manière coaxiale avec l'arbre d'entrée (11), et un arbre intermédiaire (13) disposé parallèlement à l'arbre d'entrée (11) et à l'arbre de sortie (12),
une extrémité arrière de l'arbre d'entrée (11) étant ajustée intérieurement dans une extrémité avant de l'arbre de sortie (12),
la boîte de vitesse (1) est conçue comme une boîte de vitesse de type réducteur de sortie dans laquelle la pluralité de trains d'engrenages de boîte de vitesse (G1 à G5, GR) sont disposés entre l'arbre d'entrée (11) et l'arbre intermédiaire (13) et un train d'engrenages réducteur (G0) est disposé entre l'arbre de sortie (12) et l'arbre intermédiaire (13), et
la plaque intermédiaire (60) est disposée sur un côté du train d'engrenages réducteur (G0), le côté faisant face au carter d'embrayage (21).

5. Procédé de fabrication d'une boîte de vitesse (1) pour véhicule, la boîte de vitesse (1) comportant un carter de boîte de vitesse (2) renfermant une unité de boîte de vitesse (100) comportant des arbres (11, 12, 13) et une pluralité de trains d'engrenages de boîte de vitesse (G1 à G5, GR), la boîte de vitesse (1) étant conçue de telle manière que les arbres (11, 12, 13) s'étendent dans une direction de l'avant vers l'arrière du véhicule quand la boîte de vitesse est montée sur un côté arrière d'un moteur qui est installé dans le véhicule dans le sens longitudinal et le carter de boîte de vitesse (2) étant du type à deux segments, dans lequel le carter de boîte de vitesse (2) est divisé en deux segments, à savoir un carter d'embrayage (21) et un carter d'engrenages (22), le carter d'engrenages (22) étant pourvu, sur une partie intermédiaire de celui-ci, d'une plaque intermédiaire (60) portant des paliers intermédiaires (16, 19), les paliers intermédiaires (16, 19) supportant les arbres (11, 12, 13), le procédé de fabrication comprenant les étapes de :
disposition du carter d'embrayage (21) de telle sorte qu'une surface correspondant au carter d'engrenages (22) soit tournée vers le haut ;
après la disposition du carter d'embrayage (21), assemblage de l'unité de boîte de vitesse (100) au carter d'embrayage (21) par le dessus du carter d'embrayage (21) ;
après l'assemblage de l'unité de boîte de vitesse (100), placement de la plaque intermédiaire (60) sur des surfaces des paliers intermédiaires (16, 19) orientées dans la direction opposée au carter d'embrayage (21), les paliers intermédiaires (16, 19) ayant été incorporés dans l'unité de boîte de vitesse (100) à l'avance ;
après le placement de la plaque intermédiaire (60), assemblage d'éléments d'engrenage (38, 48) depuis un côté de la plaque intermédiaire (60) orienté dans la direction opposée au carter d'embrayage (21) ; et
après l'assemblage des éléments d'engrenage (38, 48), assemblage du carter d'engrenages (22) au carter d'embrayage (21) de telle manière que le carter d'engrenages (22) renferme l'unité de boîte de vitesse (100) et qu'une surface d'extrémité du carter d'engrenages (22) faisant face au carter d'embrayage (21) et une surface d'extrémité du carter d'embrayage (21) faisant face au carter d'engrenages (22) se correspondent, dans lequel
lors de l'assemblage du carter d'engrenages (22), le carter d'engrenages (22) est fixé au carter d'embrayage (21) au moyen d'un boulon (23) inséré en direction du carter d'embrayage (21) et la plaque intermédiaire (60) est fixée au carter d'engrenages (22) au moyen d'un boulot (26) inséré depuis l'extérieur du carter d'engrenages (22) en direction du carter d'embrayage (21).
